# EUROPEAN PATENT SPECIFICATION

(11) **EP 4 669 518 B1**
(45) Date of publication and mention of the grant of the patent: **28.10.2026**
(21) Application number: 24705695.5
(22) Date of filing: 21.02.2024
(51) Int. Cl.: B29C 70/20, B29C 70/74, B29C 45/00

(54) **A PUSHABLE REINFORCEMENT ELONGATE MEMBER AND A METHOD FOR MANUFACTURING A PART MADE FROM COMPOSITE MATERIAL**
SCHUBBARES LÄNGLICHES VERSTÄRKUNGSELEMENT UND VERFAHREN ZUR HERSTELLUNG EINES TEILS AUS VERBUNDSTOFF
ÉLÉMENT ALLONGÉ DE RENFORT POUVANT ÊTRE POUSSÉ ET PROCÉDÉ DE FABRICATION D'UNE PIÈCE CONSTITUÉE D'UN MATÉRIAU COMPOSITE

(30) Priority: 22.02.2023 EP 23382160
(43) Date of publication of application: 31.12.2025
(73) Proprietor: Reinforce3D, S.L., 43870 Amposta (ES)
(72) Inventor: CRESCENTI SAVALL, Marc, 43870 Amposta (ES); ROSELLO VAN SCHOOR, Marc, 43870 Amposta (ES)
(74) Representative: Ponti & Partners, S.L.P
(86) International application number: PCT/EP2024/054449
(87) International publication number: WO 2024/175676

(56) References cited:
- EP-B1- 3 231 592
- WO-A1-2021/219755
- WO-A1-2021/245225
- CN-A- 113 954 386
- GB-A- 1 305 198

## Description

### Field of the Invention

The present invention generally relates, in a first aspect, to a pushable reinforcement elongate member, and more particularly to a pushable reinforcement elongate member combining flexibility with capacity to transfer a compression load in their longitudinal direction when being inserted into a cavity of a body to make a part from composite material.

In a second aspect, the present invention also relates to a method for manufacturing a part made from composite material that includes the pushable reinforcement elongate member of the first aspect.

### Background of the Invention

Pushable reinforcement elongate members which comprise the features of the preamble of claim 1 are known in the art.

The reinforcement fibres can be divided in three main groups according to their length: short or chopped fibres, with a predefined length of some millimetres (e.g. 5 mm); long fibres, with a predefined length of some centimetres (e.g. 5 cm); and continuous fibres, which use to be supplied in spools of dozens or hundreds of meters and whose length use to be defined during the manufacturing process according to the size of the part.

The continuous fibres can be at the same time divided in two main groups: non-consolidated fibres such as dry fibres (i.e. only fibres in e.g. tow, roving or yarn format), dry fibres combined with a binding agent, prepregs (i.e. fibres combined with a non-cured thermoset resin), and hybrid or commingled fibres (i.e. reinforcement fibres combined with thermoplastic fibres); and consolidated fibres, i.e. fibres combined with a matrix material which is then consolidated e.g. by melting and cooling it in the case of thermoplastics or by curing it in the case of thermoset resins.

The non-consolidated continuous fibres are very flexible (i.e. they have a very low flexural modulus), they can transfer tensile loads in their longitudinal direction but their capacity for transferring bending or compression loads is negligible or even null. The consolidated continuous fibres can transfer loads in all directions, but their flexibility is low (i.e. they have a high flexural modulus).

In most of traditional composite manufacturing technologies or in the existing CFRAM (Continuous Fibre Reinforced Additive Manufacturing) technologies, the fibres are placed upon a surface, except in pultrusion, where the fibres are pulled through a short mould.

However, in CFIP (Continuous Fibre Injection Process) technology, where the part is reinforced by injecting the continuous fibres into cavities of bodies to make composite parts, such as that described in EP3231592B1 which discloses the preamble of claim 15, the fibres are injected simultaneously with liquid resin inside tubular cavities by applying (i) pressure on the resin, which causes a resin flow and drag forces on the fibre bundle and (ii) a pushing force applied on the fibres at the tubular cavity inlet.

In CFIP, the length/diameter ratio of said tubular cavities is normally very high, e.g. 100, 200 or even more, so that the frictional loads mainly derived from the length and the surface roughness of the tubular cavity can be high.

In CFIP, the number of fibres injected in the tubular cavity normally are very high. For example, for injecting a tubular cavity of diameter 5 mm with a ca. 50% of fibre volume content, is needed a bundle made of 11 tows of 24k filaments (264k in total), which are much more filaments than the used in the CFRAM technologies (normally 1k).

On the other side, the stiffness of the fibre bundle is proportional to the stiffness of its filaments or tows. Then, the use of a slightly stiff tow can result to an extremely stiff bundle.

During the injection process, in CFIP, it is very common that some fibre filaments break or fray. The frictional forces make said filaments to get stuck, which further increases the frictional forces and complicates or even prevents the injection process.

Therefore, for CFIP, the fibre bundle needs to (i) be flexible in order to enable the injection process inside tubular cavities, especially for those with non-linear trajectories, to (ii) transfer along it the pushing force applied on the fibres at the tubular cavity inlet, i.e. need to be capable of transferring compression loads in their longitudinal direction, and to (iii) avoid or minimize the effects of the fibres breakage during the injection process.

All these differences with the traditional composite manufacturing and CFRAM technologies, and the specific requirements of the CFIP technology, make the available fibre formats in the market, such as tow or yarn, to have important limitations when used for being injected inside tubular cavities by the CFIP technology.

Indeed, when used for CFIP, the existing non-consolidated fibre formats allow to apply a very low pushing force on them before the fibres buckle and/or break, which complicates or even prevents the injection process, while the existing consolidated fibre formats, although allow to apply a high pushing force on them, their low flexibility also complicates or even prevents the injection process when injected into non-linear tubular cavities.

It is therefore necessary to provide an alternative to the state of the art which covers the gaps found therein, by providing a pushable reinforcement elongate member which do not have the above mentioned drawbacks of the proposals of the prior art, able to provide an optimal balance between flexibility and pushability and which particularly allows its use for the CFIP technology. WO2021/219755 A1 discloses the features of the preamble of claim 1.

### Description of the Invention

To that end, the present invention relates, in a first aspect, to a pushable reinforcement elongate member comprising a plurality of continuous fibres.

In contrast to the pushable reinforcement elongate members known in the prior art, in the one of the first aspect of the present invention said plurality of continuous fibres are or comprise non-consolidated fibres and form a first group having a first flexural modulus, the pushable reinforcement member further comprises at least one elongate element having a second flexural modulus greater than said first flexural modulus, and said at least one elongate element is joined to said first group of continuous fibres, to transfer a pushing compression force in their longitudinal direction, from the at least one elongate element to the first group of continuous fibres.

In the present document, flexural modulus, both for the first and the second flexural modulus, must be understood as that referring to the property of the material. This property is obtained from standardized test methods and quantifies the relationship between the stress and the strain in flexural deformation, having units of force per area such as N/mm² or MPa.

Some materials such as metals show a very similar modulus irrespective of the loading conditions (tensile, compression, flexural) and it is normally used the tensile modulus (also known as Young's modulus).

Other materials such as polymers or composite materials show a different behaviour according to the loading conditions, and there are specific standards for characterizing their mechanical properties for each one. E.g. the ASTM D790 describes the standard test methods for flexural properties of unreinforced and reinforced plastics.

Other materials such as membranes, fabrics, threads, cords or the non-consolidated continuous fibres are only able to transfer tensile loads in their tangential or longitudinal direction, i.e. they don't show any or a significant resistance when submitted to compression or flexion loads, so that their compression and flexural modulus is 0 or near 0.

When a slender structure is submitted to a compression load in the longitudinal direction, it can undergo buckling if that load achieves a critical value (also known as Euler's critical load). Once this value is achieved, the stiffness of the structure decreases drastically, greatly losing their capacity of to withstand compression loads. This critical load is directly proportional to the flexural modulus of the material.

The pushable reinforcement elongate member is thus designed for being used for CFIP technology, aiming to provide an optimal balance between pushability and flexibility. It is based on the combination of (i) highly flexible fibres with a lower flexural modulus, for allowing the member to be injected into non-linear tubular cavities, (ii) one or more elongate elements with a higher flexural modulus for allowing to apply thereon a pushing compression force before the fibres or the elements start to buckle and/or break at least a 50% higher when compared to the same elongate member but without the elongate elements, and (iii) one or more elements for joining the elongate element(s) with the highly flexible continuous fibres.

The proportion of both constituents is important. For a preferred embodiment, a member with a volume fraction of elongate elements in the ranges from 1.5% to 15%, or from 1.5% to 5%, or from 3% to 15%, provides an optimal balance between pushability and flexibility. However, a higher volume fraction of elongate elements (between 15% and 75%) can still be a good solution for a wide variety of applications with soft curvatures and where high pushing forces are needed.

Thus, the pushable reinforcement elongate member of the first aspect of the present invention comprises, for some embodiments, different types of reinforcement fibres, such as carbon, aramid, glass or natural fibres, or a combination thereof.

According to an embodiment, the second flexural modulus is at least 10 times greater than the first flexural modulus.

For an embodiment, the first flexural modulus is below 10000 MPa, and the second flexural modulus is above 10000 MPa.

According to an embodiment of the pushable reinforcement elongate member of the first aspect of the present invention, the at least one elongate element is joined to the first group of continuous fibres by at least one joining element.

The joining element is mainly characterized by three aspects: the type of element, the method used for being applied and the joining locations that produces between the at least one elongate element and the first group of continuous fibres.

Multiple variants of that implementation are envisaged, according to the first aspect of the present invention, for which the at least one joining element mutually joins the first group of continuous fibres and the at least one elongate element by braiding, winding, tying or stitching at least one thread and/or by applying a matrix material, such a thermoset or thermoplastic polymer (could be the same resin or material in the liquid state used for the injection process), an adhesive or a binder.

One joining element can produce one or more joining locations depending on the method used for being applied. E.g. if the joining element is a tied thread which is then cut, each joining element will produce one joining location, but if the joining element is a winded thread applied continuously along the elongate member, said joining element will produce a plurality of joining locations.

Thus, the distance between said joining locations, can be determined by the distance between joining elements and/or by the joining element application method. For an embodiment, a thread is winded in a non-homogeneous way, having zones with contiguous turns, or low pitch, being a joining location each one of said zones, and zones with higher pitch (at least 10 times higher than said low pitch) within which no joining locations are produced. The term pitch must be understood as the distance in the longitudinal direction between corresponding points on adjacent turns.

For some embodiments, the joining element(s) provide further functions in addition to the joining function, such as the function of electrically isolating the continuous fibers to avoid phenomena such as galvanic corrosion. Alternatively, those further functions are provided, for other embodiments, by an additional outer layer providing one or more of those further functions.

According to an embodiment of the pushable reinforcement elongate member of the first aspect of the present invention, the elongate element is joined to the first group of continuous fibres at least at two locations along their length.

For an embodiment, the above mentioned at least two locations are distanced between 5 and 50 times the diameter or thickness of the pushable reinforcement elongate member.

For an embodiment, the elongate element is joined to the first group of continuous fibres at least at two locations along at least 75% of their length, preferably at least at or near both ends thereof.

According to an implementation of that embodiment, the pushable reinforcement elongate member of the first aspect of the present invention comprises at least one joining element for providing said mutually joining of the first group of continuous fibres and the at least one elongate element at said at least two locations, while enabling the impregnation of the continuous fibres of the first group and the at least one elongate element with a resin flowing through regions of the continuous fibres of the first group not covered by the at least one joining element.

The at least one joining element has to be able to transfer significant forces between the elongated element and the first group of fibres.

As a representative example, if there is a portion of 50 cm length injected into the tubular cavity of a pushable reinforcement elongate member that has joining locations every 10 cm and the force that is being applied to the pushable reinforcement elongate member at that moment at the entrance of the cavity is 100 N, this force will be distributed among 5 joining locations and the force that the at least one joining element will have to transfer at each joining location will be approximately 20 N.

According to an embodiment, the at least one elongate element is formed by a second group of continuous fibres.

For an implementation of that embodiment, the continuous fibres of the second group are or comprise consolidated continuous fibres.

For other embodiments, the at least one elongate element is formed by a second group of continuous fibres of the same material as the continuous fibres of the first group, or of a different material for achieving added functionalities (besides that of transferring a pushing compression force, such as transferring electric or optical signals there along), such as metal or glass and/or is in the form of at least one rod, wire or optical fibre.

In an embodiment of the pushable reinforcement elongate member of the first aspect of the present invention, the above mentioned non-consolidated fibres are dry reinforcement continuous fibres.

For other embodiments, alternative or complementary to the one mentioned above, the above mentioned non-consolidated fibres are o comprise other types of non-consolidated fibres other than dry reinforcement continuous fibres, such as dry fibres combined with a binding agent, prepregs (i.e. fibres combined with a non-cured thermoset resin), or hybrid or commingled fibres (i.e. reinforcement fibres combined with thermoplastic fibres).

For an implementation of that embodiment, for which all the continuous fibres of the first group are dry reinforcement continuous fibres, it must be noted that the flexural modulus of the dry fibres is 0 or near 0, and therefore, even for a small second flexural modulus, the latter will be near infinite times higher than the first flexural modulus.

For another implementation of that embodiment, the first group of continuous fibres also includes, combined with the dry reinforcement continuous fibres, thermoplastic fibres, for providing a pushable and hybrid or commingled format, and/or a non-cured thermoset resin, for providing a pushable and prepreg format. For these cases, the above mentioned first flexural modulus will also be 0 or near 0 since the matrix material is not consolidated.

For an embodiment, the first group of continuous fibres form at least one first fibre bundle, generally with a circular or substantially circular cross-section, while for another embodiment they are assembled into at least one first fibre tape, generally with a rectangular or substantially rectangular cross-section with a base significantly wider than its thickness.

According to an embodiment, the at least one elongate element is arranged at a perimeter region of the at least one first fibre bundle or tape and/or within the at least one first fibre bundle or tape, at least at said at least two locations.

In a second aspect, the present invention relates to a method for manufacturing a part made from composite material, wherein the part comprises a body and continuous fibres arranged within said body, wherein the method comprises the steps of:
a) obtaining a body that includes one or more tubular cavities in its interior, wherein each tubular cavity of said one or more tubular cavities extends between a first end, disposed on the outer surface of the body and which comprises an inlet orifice, and a second end, opposite to said first end;
b) introducing the pushable reinforcement elongate member of the first aspect of the present invention (for any of its embodiments) and a matrix material in the liquid state (such as a melted thermoplastic or a non-cured thermoset resin) in the interior of at least one tubular cavity of said one or more tubular cavities through its inlet orifice, such that the input end of the pushable reinforcement elongate member advances towards the second end of said at least one tubular cavity; and
c) consolidating said matrix material in the liquid state until it solidifies, adhering to the body of the part and fixing the pushable reinforcement elongate member in the interior of said at least one tubular cavity.

In a further aspect, the present invention concerns to a part comprising:
- a body that is made from one material or from a combination of different materials;
- at least one pushable reinforcement elongate member of the first aspect of the present invention (for any of its embodiments) in its interior, extending between a first end, disposed on or adjacent the outer surface of the body, and a second end;
- a consolidated matrix material surrounding the at least one pushable reinforcement elongate member, being this material different from at least one of the at least one material of the body, or the same material but with different properties.

### Brief Description of the Drawings

The previous and other advantages and features will be better understood from the following detailed description of embodiments, with reference to the attached drawings, which must be considered in an illustrative and non-limiting manner, in which:
Figure 1 schematically shows a side cross-section of the pushable reinforcement elongate member of the first aspect of the present invention, once injected within a tubular cavity of a body of a part, for an embodiment.
Figure 2 schematically shows the pushable reinforcement elongate member of the first aspect of the present invention, for an embodiment for which the joining element is a winded thread.
Figure 3 schematically shows the pushable reinforcement elongate member of the first aspect of the present invention, for an embodiment for which the joining element is made of two threads applied by braiding.
Figure 4A schematically shows a side cross-section of several pushable reinforcement elongate members of the first aspect of the present invention, once injected within a tubular cavity of a body of a part, for an embodiment for which the joining elements are distributed homogeneously there along.
Figure 4B is a cross-section of the part illustrated in Fig. 4A, taken through a cutting plane represented by cutting plane lines A-A.
Figure 5A schematically shows a side cross-section of several pushable reinforcement elongate members of the first aspect of the present invention, once injected within a tubular cavity of a body of a part, for an embodiment for which the joining elements are distributed non-homogeneously there along.
Figure 5B is a cross-section of the part illustrated in Fig. 5A, taken through a cutting plane represented by cutting plane lines A-A.
Figure 6A schematically shows the pushable reinforcement elongate member of the first aspect of the present invention, for an embodiment for which the joining between the first group of continuous fibres and the elongate element is performed according to a joining option 1A.
Figure 6B shows an enlarged detail of one of the joined zones, for the embodiment of Fig. 6A.
Figure 6C is a cross-section of the pushable reinforcement elongate member illustrated in Fig. 6A, taken through a cutting plane represented by cutting plane lines A-A.
Figure 7A schematically shows the pushable reinforcement elongate member of the first aspect of the present invention, for an embodiment for which the joining between the first group of continuous fibres and the elongate elements is performed according to a joining option 1B.
Figure 7B shows an enlarged detail of one of the joined zones, for the embodiment of Fig. 7A.
Figure 7C is a cross-section of the pushable reinforcement elongate member illustrated in Fig. 7A, taken through a cutting plane represented by cutting plane lines A-A.
Figure 8A schematically shows the pushable reinforcement elongate member of the first aspect of the present invention, for an embodiment for which the joining between the first group of continuous fibres and the elongate elements is performed according to a joining option 2.
Figure 8B shows an enlarged detail of one of the joined zones, for the embodiment of Fig. 8A.
Figure 8C is a cross-section of the pushable reinforcement elongate member illustrated in Fig. 8A, taken through a cutting plane represented by cutting plane lines A-A.
Figure 9A schematically shows the pushable reinforcement elongate member of the first aspect of the present invention, for an embodiment for which the joining between the first group of continuous fibres and the elongate elements is performed according to a joining option 3.
Figure 9B shows an enlarged detail of one of the joined zones, for the embodiment of Fig. 9A.
Figure 9C is a cross-section of the pushable reinforcement elongate member illustrated in Fig. 9A, taken through a cutting plane represented by cutting plane lines A-A.
Figure 10A schematically shows the pushable reinforcement elongate member of the first aspect of the present invention, for some embodiments for which the first group of continuous fibres form a tape.
Figure 10B shows a cross-section of the pushable reinforcement elongate member illustrated in Fig. 10A, taken through a cutting plane represented by cutting plane lines A-A, for an embodiment for which the elongate element is a consolidated layer.
Figure 10C shows a cross-section of the pushable reinforcement elongate member illustrated in Fig. 10A, taken through a cutting plane represented by cutting plane lines A-A, for an embodiment for which the elongate elements are consolidated rods.
Figure 11A schematically shows the pushable reinforcement elongate member of the first aspect of the present invention, for an embodiment for which the joining between the first group of continuous fibres and the elongate elements is performed according to a joining option 1C.
Figure 11B shows an enlarged detail of one of the joined zones, for the embodiment of Fig. 11A.
Figure 11C is a cross-section of the pushable reinforcement elongate member illustrated in Fig. 11A, taken through a cutting plane represented by cutting plane lines A-A.
Figure 12A schematically shows a cross-section of a body of a part having tubular cavities defined therewithin, to be used for manufacturing a part according to the method of the second aspect of the present invention, for an embodiment.
Figure 12B schematically shows the body of the part of Fig, 12A, and an injector coupled to an input end of one of the tubular cavities thereof.
Figure 12C schematically shows the same elements as Fig. 12B, but once the pushable reinforcement elongate member of the first aspect of the present invention has been injected into the tubular cavity by means of the injector coupled thereto, according to an embodiment of the method of the second aspect of the present invention.
Figure 12D schematically shows the final composite part, once two of the pushable reinforcement elongate members of the first aspect of the present invention have been injected joint with a matrix material in the liquid state (not shown) into the two shown tubular cavities, the elongate members have been cut at the tubular cavity entrance and the injector has been uncoupled, according to an embodiment of the method of the second aspect of the present invention.

### Detailed Description of Several Embodiments

As illustrated, according to different embodiments, in the appended Figures, the first aspect of the present invention relates to a pushable reinforcement elongate member R, comprising a plurality of continuous fibres forming a first group F having a first flexural modulus, and one or more elongate elements E having a second flexural modulus greater than the first flexural modulus, and where the one or more elongate elements E is/are joined to the first group F of continuous fibres at two or more locations L along their length, to transfer a pushing compression force in their longitudinal direction, from the elongate element(s) E to the first group F of continuous fibres.

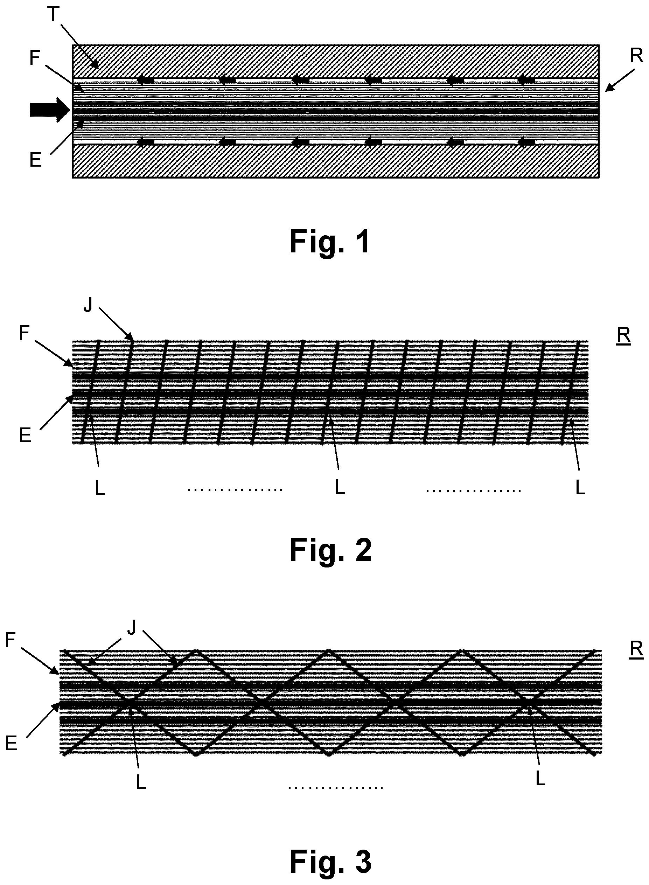

As shown, for example in Fig. 1, the pushable reinforcement elongate member R is based on the combination of fibres not able to transfer compressive loads (normally dry fibres, but they could also be prepregs or commingled fibres), i.e. those of first group F, with elongate element(s) E, such as consolidated fibres or composite rods, which are able to transfer compressive loads. Said elongate element(s) E are the ones transferring the pushing load along the fibre bundle forming the pushable reinforcement elongate member R.

The consolidated fibres or composite rods are normally manufactured by pultrusion with a fibre volume fraction of ca. 60%. Pultrusion is the most cost-effective composite manufacturing technology.

It has been proven that a volume fraction of elongate elements inside the bundle within a range from 1.5% to 15%, or from 1.5% to 5%, or from 3% to 15%, provides a good balance between pushability and flexibility. However, a higher volume fraction of elongate elements (between 15% and 75%) can still be a good solution for a wide variety of applications with soft curvatures and where high pushing forces are needed.

When the elongate elements are made of consolidated fibres, using a low fraction of elongate elements also contributes to (i) reach a cost-effective solution, since consolidated fibres are significantly more expensive than e.g. dry fibres, and to (ii) reach a higher total fibre volume fraction inside the tubular cavity, since the thin fibre filaments (usually 7 microns for carbon fibres) can achieve a much higher compaction (or smaller void areas between filaments) when compared to the relatively thick composite rods (e.g. 0.5 mm or 1 mm).

A same fraction of consolidated fibres is better to be reached with a group of thinner rods than less but thicker rods, since more flexibility and lower curvature radius can be achieved in this way. The use of thinner rods also facilitates the cutting of the bundle once finished the injection of the tubular cavity. It has been proven that carbon composite rods of diameter 0,5 mm can be bent up to a curvature radius of ca. 1,5 cm without break and fully recovering the initial position. This second feature is also important, since facilitates the injection process, according to the above described CFIP technology.

As an example, a pushable fibre bundle for injecting a tubular cavity of diameter 5 mm could be made of 11 dry carbon fibre tows of 24k with a flexural modulus of 0 MPa plus 3 carbon/epoxy pultruded composite rods of diameter 0,5 mm with a flexural modulus of 120000 MPa, which would result in a volume fraction of elongate elements inside the bundle of 5,6%, a total fibre volume fraction inside the cavity of 52,4% and a minimum curvature radius of ca. 1,5 cm.

According to CFIP and/or to the method of the second aspect of the present invention, the pushing force applied by the injection system at the inlet of the tubular cavity T of the body B (action force, represented by a right pointing arrow in Fig. 1) will be transferred through the elongate element(s) E (consolidated fibres) along the fibre bundle. The reaction forces are the friction forces (represented by left pointing arrows in Fig. 1) produced between the fibre bundle and the tubular cavity wall. Then, the main fibres receiving the friction forces are the perimetral ones.

If the elongate element(s) E, such as consolidated fibres, is/are not mechanically joined to the fibres of first group F, such as dry fibres, and especially to the perimetral ones, they will slip from them, preventing the injection process. Then, a third element is necessary for enabling the proper functionality of the fibre bundle, which needs to be able to (i) join the consolidated fibres E with the dry fibres F (and especially the perimetral ones) and to (ii) transfer the loads between them.

When there are many, the elongate elements E (such as composite rods) should preferably be placed together since the lower the distance between them, the lower the inertia moment and the higher the flexibility of the bundle.

The use of the elongate elements E also contributes to significantly reduce or avoid the bending or buckling of the fibres of the first group F when pushed, achieving in this way a better alignment of the fibres and then better mechanical properties.

These joining elements J will also have the function of to avoid or limit the fray of the fibres of first group F during the injection process, which is also key for enabling the process, as well as to hold the fibres in place for allowing the proper handling of the material.

The joining element(s) J can be of many different types and/or provided according to different arrangements, depending on the embodiment, such as:
- Joining option 1, A,B and C (see below). A thread or group of threads stitched, winded (see Fig. 2), tied or braided (see Fig. 3) on (option 1A) and/or through (options 1B and 1C) the pushable reinforcement elongate member R (such as bundle or tape).
- Joining option 2. A matrix material, such as cured thermoset resin, a consolidated thermoplastic, an adhesive or similar.
- Joining option 3. A combination of both.

In joining option 1B both the plurality of the continuous fibres of the first group F and the elongate element(s) E are stitched, winded, tied or braided by a joining element J (such as a thread) at inner locations Li (for example by an inner winding W1), while in joining option 1C only the elongate element(s) E is/are stitched, winded, tied or braided at inner locations Li (for example by an inner winding W1) by the joining element J (such as a thread).

In both joining options 1B and 1C, at outer locations Lo the joining element J (such as a thread) stitches, winds, ties or braids the continuous fibres of the first group F (for example by an outer winding W2).

If dry fibres are used for first group F, the outer surface of the elongate member R needs to be permeable in order to allow the resin to flow through those dry fibres during the injection process, enabling the proper impregnation of the fibre bundle or tape. This permeability can be achieved by applying the joining element in a way that a portion of the outer surface remains not covered by it.

In addition, the joining provided by the joining element(s) J can be applied in an homogeneous manner or in a non-homogeneous manner.

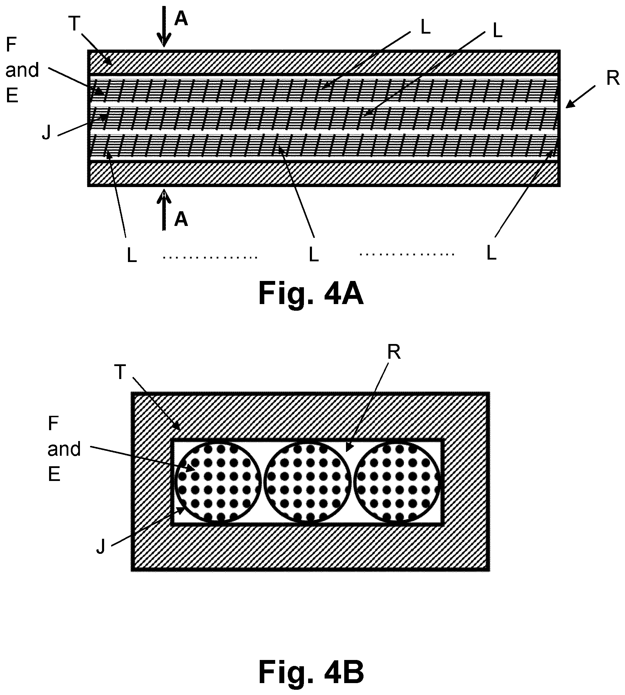

Figs. 4A and 4B show and embodiment for such homogeneous joining, particularly for an embodiment where three bundles of continuous fibres, including both those of the first groups F and elongate elements E, which have been injected into a tubular cavity T, are respective joined by means of three respective threads J winded (i.e., according to joining option 1A) homogeneously along them, where the winding pitch is low and then each two contiguous winding turns are close to each other.

However, joining all the fibre bundle in a homogeneous way leads to the following limitations:
1. It significantly decreases the flexibility of the bundle.
2.It compacts the fibres all along the bundle, complicating or even preventing its correct impregnation specially at the inner zone.
3. It prevents an homogeneous dispersion of the fibres inside the tubular cavity.
4. It prevents the adaptation of the fibres to different section geometries of the tubular cavity.

For this reason, it is preferred to do the joining in a non-homogeneous way. It has been proven that joining the fibre bundle (or tape) each 5 - 50 times its diameter or thickness do not significantly affect its flexibility and impregnability while keeping its pushability.

The low fraction of elongate elements E, such as consolidated fibre rods, and the thin diameter thereof, when combined with the non-homogeneous joining, drives to a very low adhesion surface. For achieving a proper adhesion able to properly transfer the loads from the elongate elements E to the first group of fibres F, it can be necessary the use of additional substances such as activators, primers or adhesion promoters.

With the non-homogeneous joining, the above limitations 3 and 4 will also exist but only at the joined zones, which represents a small fraction of the fibre bundle. If several fibre bundles are injected inside a tubular cavity, an homogeneous fibre distribution can be achieved if the joined zones are not coincident.

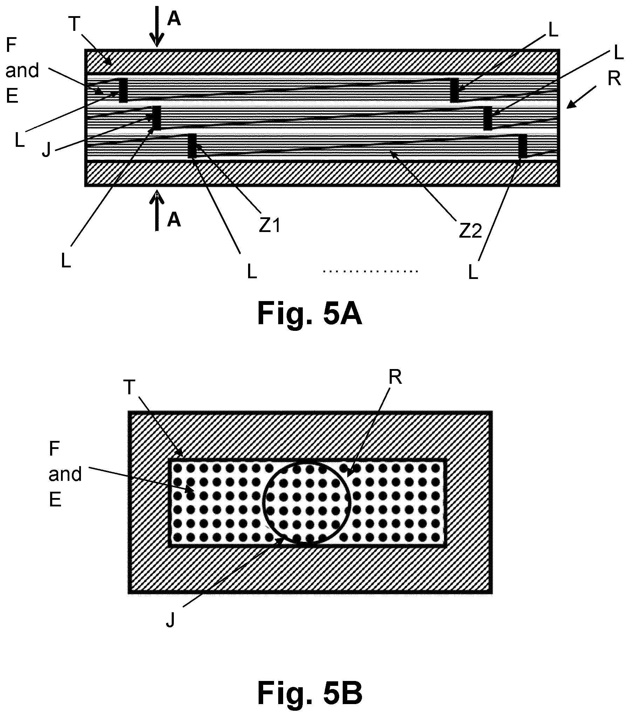

Figs. 5A and 5B show and embodiment for such non-homogeneous joining, particularly for an embodiment where three bundles of continuous fibres, including both those of the first groups F and the elongate elements E, which have been injected into a tubular cavity T, are respectively joined by means of three respective threads J winded (i.e. according to joining option 1A) non-homogeneously along them, where there are zones Z1 with a very low winding pitch and zones Z2 with a very high winding pitch.

In the embodiment illustrated in Figs. 5A - 5B, the zones with a very low winding pitch are not coincident between the bundles, allowing a more homogeneous distribution inside the tubular cavity, as can be clearly seen in the cross-section depicted in Fig. 5B when compared to Fig. 4B.

In joining option 1, the thread(s) J should be preferably combined with at least one matrix material, such as thermoset resin (prepreg), thermoplastic fibres (commingled), an adhesive or similar, or a combination thereof, so that when consolidated, it gets bonded to the elongate element(s) E and also to the fibres of the first group F.

As shown in Figures 2, and 4A, for the homogeneous joining, each turn corresponds to a joining location L (only a few have been indicated in the figures, for clarity's sake), while for the embodiment of Fig. 3 each crossing point of the braided threads J corresponds to a respective joining location L.

However, for the embodiments referring to non-homogeneous joining, i.e. for those of Figs. 5A-5B, 6A-6C, 7A-7C, and 11A-11C, the joining locations L are those which are really longitudinally distanced (generally distanced between 5 and 50 times the diameter or thickness of the pushable reinforcement elongate member R) i.e., for example for the embodiment of Figs. 5A and 5B, each very low winding pitch zone Z1 corresponds to one of those joining locations L.

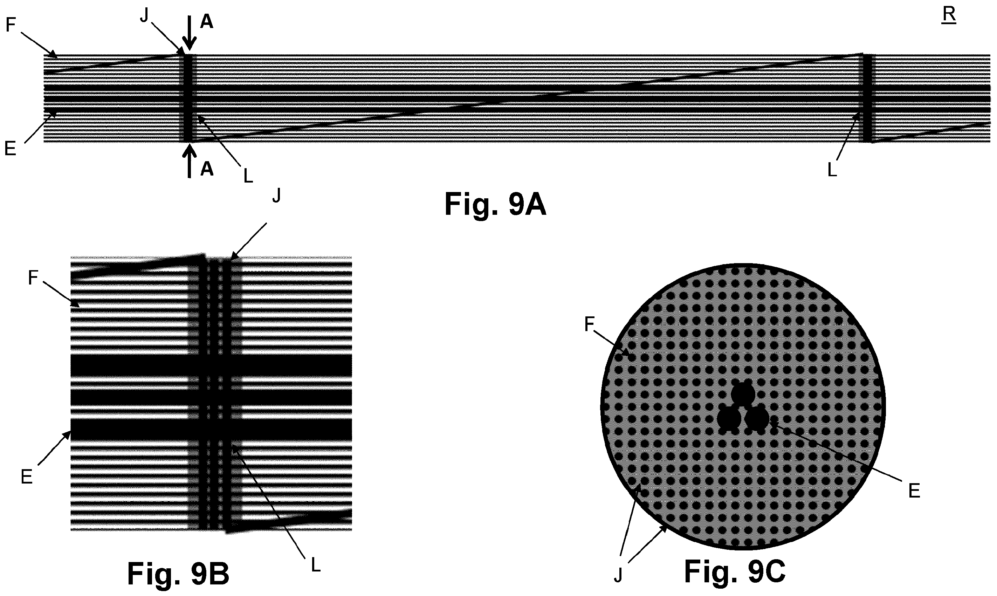

In other words, for the embodiment of Figs. 5A-5B, 6A-6C, 7A-7C, and 11A-11C, in the very high winding pitch zones Z2, no joining locations are considered because, at this zones, either the thread is not combined with a matrix material, or it is combined but not consolidated, or the thread tension is too low so that even when combined with a matrix material and consolidated, an effective joining cannot been guaranteed. This is also valid for the embodiment of Figs. 9A-9C, for the intermediate zones between joining locations L.

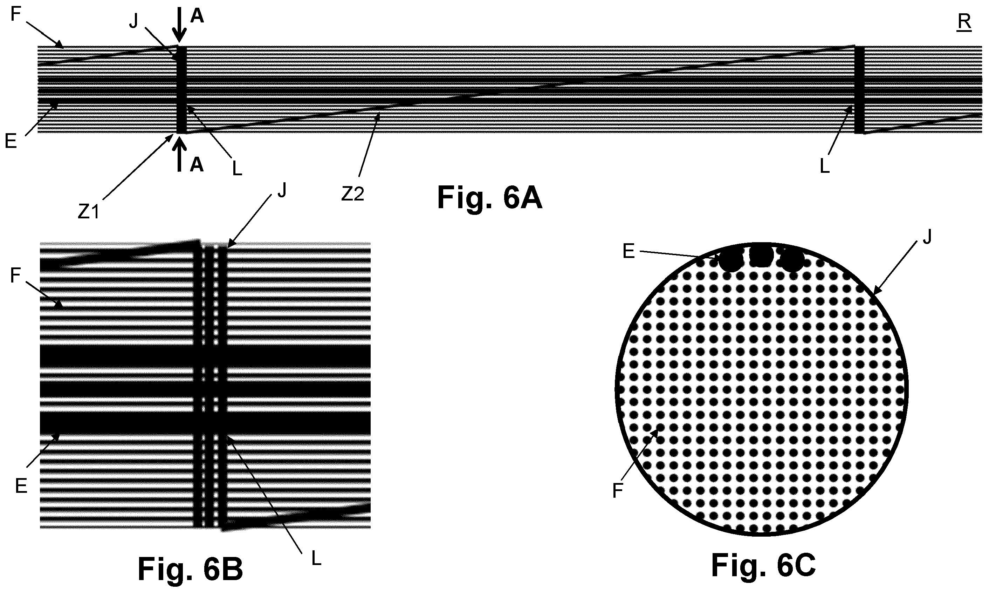

For the embodiments of Figures 6A-6C, 7A-7C and 11A-11C, although the joining locations L are each formed by a respective group of sublocations (each crossing point), all of those sublocations of each group are considered to form a single location L since the relative distance between them is very low (less than the diameter or thickness of the reinforcement elongate member R).

The thread J can be made of a specific material for this function, such as polyester or aramid fibres, but also of the same material than the fibre bundle. The thread J can be made of a rigid or of an elastic material.

For an embodiment, the fibres of the first group F, the elongate element(s) E, and even the joining element(s) are made of the same type of reinforcement fibres, such as carbon fibre, so a "full-carbon, pushable and flexible" member can be obtained. In addition, optionally, when the joining element(s) J are combined with a matrix, the material of that matrix can be the same as that of the matrix material in the liquid state used to impregnate the pushable reinforcement elongate member R.

In order to achieve a proper mechanical join, the elongate element(s) E need to be directly in contact with the thread J. This implies that if the thread J is placed on the fibre bundle including the fibres of first group F, the elongate element(s) E (such as consolidated fibres) should be located at the perimeter or outer zone. This arrangement, corresponding to joining option 1 A, is illustrated in Figs. 6A-6C.

For an implementation of the embodiment of Figs. 6A to 6C, the pushable reinforcement elongate member R has the following fibre bundle configuration:
- Dry fibres F: 11 carbon fibre tows of 24k filaments, flexural modulus of 0 MPa
- Elongate elements E: 3 carbon/epoxy rods of 0,5 mm with a fibre volume fraction of 60%, placed at the perimeter region of the fibre bundle, flexural modulus of 120000 MPa.
- Volume fraction of elongate elements E inside the bundle: 5,6%.
- Joining element J: aramid fibre thread of 200 Denier impregnated with cyanoacrylate adhesive.
- Application method: perimetral winding non-homogeneous
- Low pitch zones Z1 or joining locations L:
   - Number of turns: 3
   - Pitch: 1 mm
- High pitch zones Z2:
   - Number of turns: 1
   - Pitch: 10 cm
- Distance between joining locations L: 10 cm
- Maximum transfer load per each joining location L: >40 N.

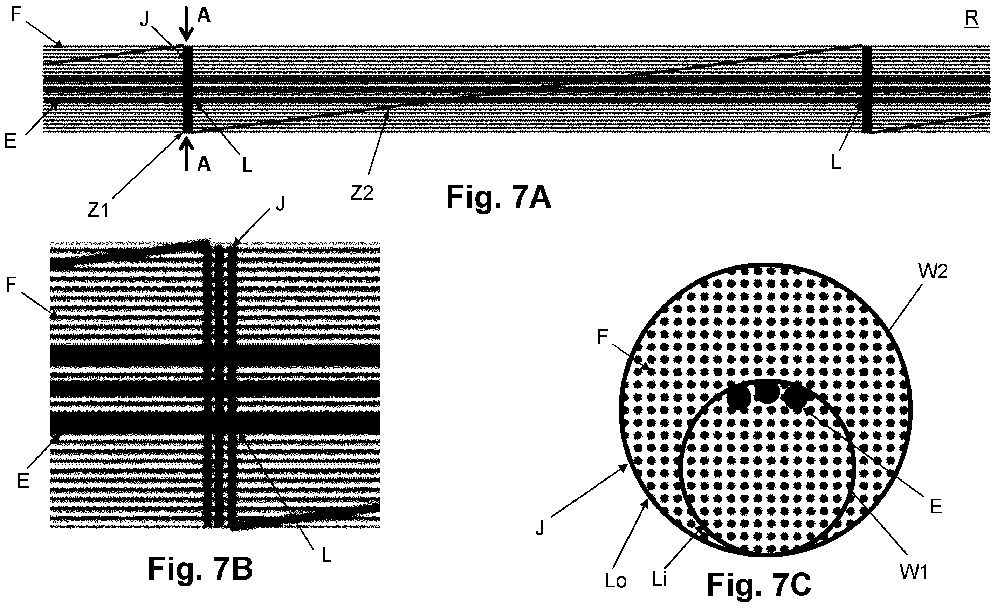

If the thread J is also placed through the fibre bundle, i.e. within the fibres of first group F, the elongate element(s) E can be then placed inside the bundle, i.e. according to joining option 1B or 1C. This arrangement, for joining option 1B, is shown in Figs. 7A to 7C, and includes a joining element J (such as a thread) winded at inner locations Li, with inner winding W1, around the plurality of continuous fibres of the first group F and the elongate element(s) E, and winded at outer locations Lo, with outer winding W2, around the continuous fibres of the first group F.

For an implementation of the embodiment of Figs. 7A to 7C, the pushable reinforcement elongate member R has the following fibre bundle configuration:
- Dry fibres: 11 carbon fibre tows of 24k filaments, flexural modulus of 0 MPa.
- Elongate elements E: 3 carbon/epoxy rods of 0,5 mm with a fibre volume fraction of 60%, placed within the fibre bundle, flexural modulus of 120000 MPa.
- Volume fraction of elongate elements E inside the bundle: 5,6%.
- Joining element J: aramid fibre thread of 200 Denier impregnated with cyanoacrylate adhesive.
- Application method: inner winding W1, for inner locations Li, and perimetral winding W2, for outer locations Lo, non-homogeneous.
- Low pitch zones Z1 or joining locations L:
   - Number of turns: 3 inner and 3 perimetral
   - Pitch: 1 mm
- High pitch zones Z2:
   - Number of turns: 1 perimetral
   - Pitch: 10 cm
- Distance between joining locations L: 10 cm
- Maximum transfer load per each joining location L: >40 N.

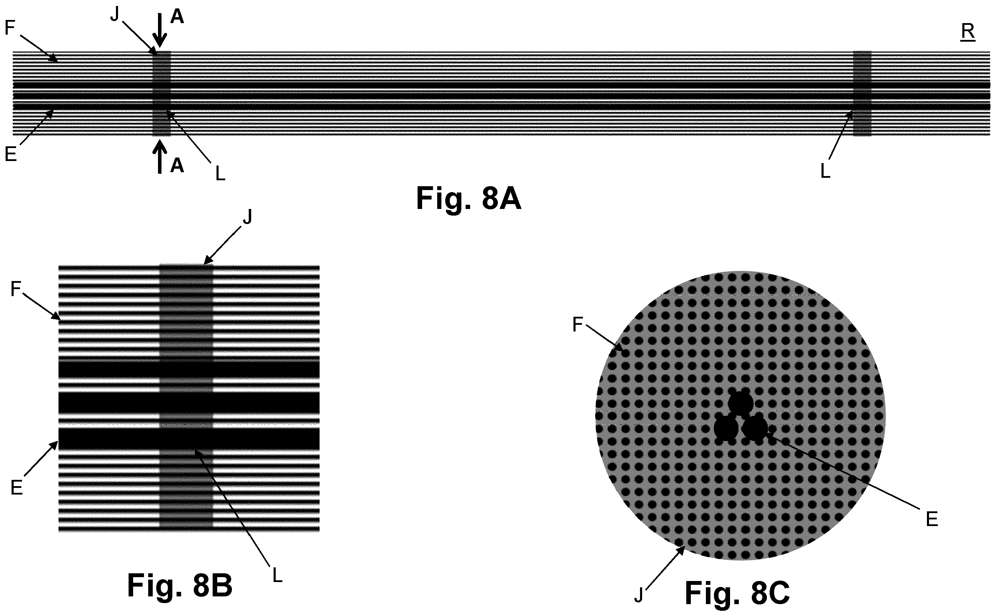

Figs. 8A to 8C show a further embodiment of the pushable reinforcement elongate member R of the first aspect of the present invention, for which the joining is performed according to joining option 2 described above, i.e. for which joining element J is a matrix material, such as cured thermoset resin, a consolidated thermoplastic, an adhesive or similar, applied to several joining locations L, penetrating through the fibre bundle and thus impregnating the same to constitute corresponding joined zones at which the fibres of first group F are joined to the elongate elements E. In this case, although for the embodiment illustrated in Fig. 8C the elongate elements E are arranged centrally within the fibre bundle, they could be placed at any position if the matrix material fills all the bundle cross-section.

For an implementation of the embodiment of Figs. 8A to 8C, the pushable reinforcement elongate member R has the following fibre bundle configuration:
- Dry fibres: 27 carbon fibre tows of 24k filaments, flexural modulus of 0 MPa.
- Elongate elements E: 1 carbon/epoxy rods of 0,8 mm with a fibre volume fraction of 60%, placed within the fibre bundle, flexural modulus of 120000 MPa.
- Volume fraction of elongate elements E inside the bundle: 2,0%.
- Joining element J: aramid fibre thread of 200 Denier impregnated with cyanoacrylate adhesive.
- Application method: inner winding W1 and perimetral winding W2, non-homogeneous.
- Low pitch zones Z1 or joining locations L:
   - Number of turns: 3 inner and 3 perimetral
   - Pitch: 1 mm
- High pitch zones Z2:
   - Number of turns: 1 perimetral
   - Pitch: 10 cm
- Distance between joining locations L: 10 cm
- Maximum transfer load per each joining location L: >40 N.

Figs. 9A to 9C show a further embodiment of the pushable reinforcement elongate member R of the first aspect of the present invention, for which the joining is performed according to joining option 3 described above, i.e. for which there are two types of joining elements J combined, a thread winded at several joining locations L, and a matrix material, such as cured thermoset resin, a consolidated thermoplastic, an adhesive or similar, applied to said several joining locations L, penetrating through the winded thread and through the fibre bundle and thus impregnating the same to constitute corresponding joined zones at which the fibres of first group F are joined to the elongate elements E. In this case, although for the embodiment illustrated in Fig. 9C the elongate elements E are arranged centrally within the fibre bundle, they could be placed at any position if the matrix material fills all the bundle cross-section.

For Figs. 1 to 9A-9C, the reinforcement elongate member R formed one or more fibre bundles, i.e. bundles with a substantially circular cross-section.

However, for tubular cavities with a flattened section, i. e. with a width significantly higher than the height, the use of a reinforcement elongate member R with a tape format can be more efficient than using fibre bundles.

Tapes could be done of different layers of unidirectional, woven or multiaxial fabrics, or even a combination of them. The elongate elements for enabling the pushability of the tape could be one of several of these layers, or also composite rods disposed longitudinally within and/or on the tape.

The tape section could not necessary be rectangular but have an certain geometry (or preform) in order to fit inside tubular cavities with non-rectangular or arbitrary crosssections The joining of the fibres could be made according to any of the above described three joining options, but in this case, stitching would be the preferred method since winding, braiding or tying a thread would tend to force the section to be circular at the joined zones.

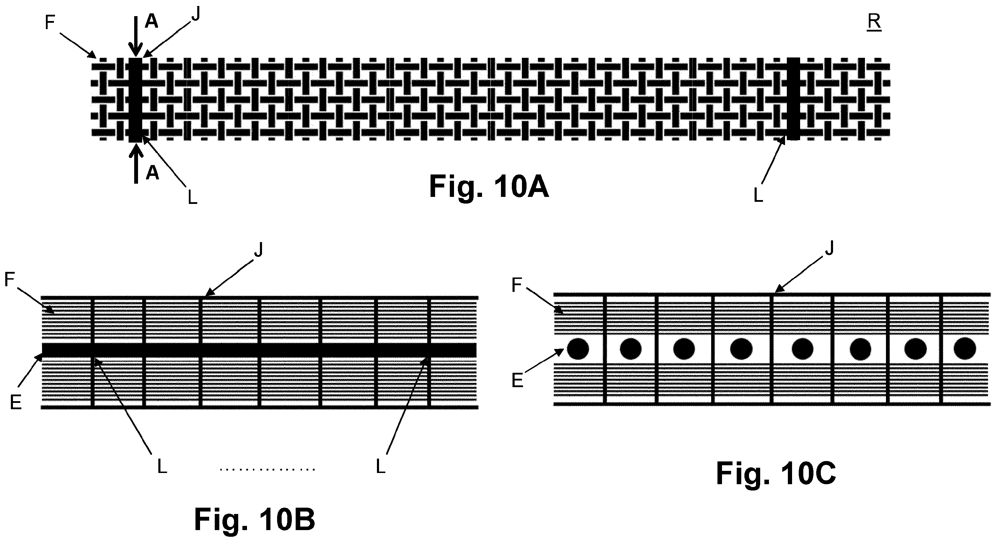

Two embodiments for such a tape format are shown in Figs. 10A, 10B to 10C.

For the embodiment of Fig. 10B, the elongate element E is a consolidated layer E, particularly centrally arranged, although it could be arranged at other position, such as at top or bottom of the tape.

For the embodiment of Fig. 10C there are multiple elongate elements E, in the form of consolidated rods E.

For both embodiments, the joining element J is a stitched thread, as clearly shown in Figs. 10B and 10C.

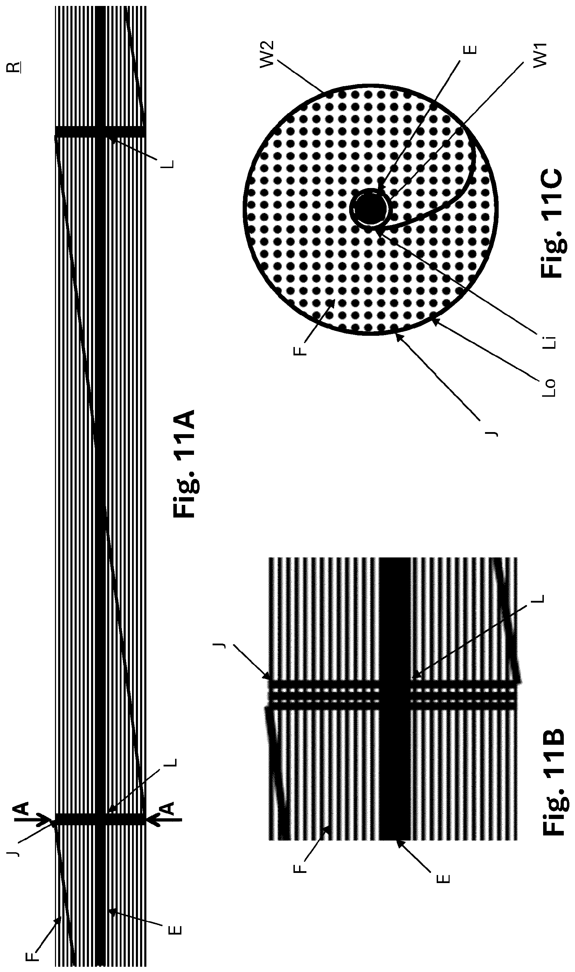

Figures 11A to 11D show a further embodiment of the pushable reinforcement elongate member R of the first aspect of the present invention, for which the joining is performed according to Option 1C. The elongate element E is winded at inner locations Li, particularly by inner winding W1, while the continuous fibres of the first group F are winded at outer locations Lo, particularly by outer winding W2. Inner W1 and outer W2 windings are mutually joined, as they are part of the same joining element J (such as a thread).

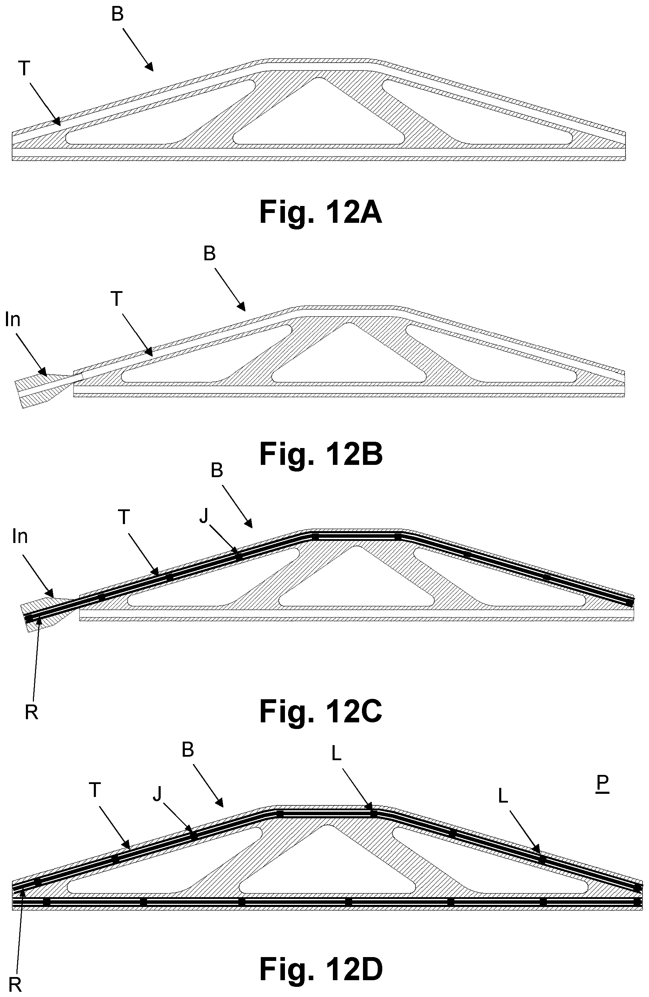

Finally, Figures 12A to 12D are provided to represent a sequence of the different states for manufacturing a part according to the method of the second aspect of the present invention, for an embodiment.

Particularly, Fig. 12A shows a body B having tubular cavities T defined therewithin obtained according to step a) of the method, Fig. 12B shows that body B with an injector In coupled to an input end of one of the tubular cavities T thereof, Figure 12C shows the pushable reinforcement elongate member R of the first aspect of the present invention already injected into the tubular cavity T by means of the injector In coupled thereto according to part of step b) of the method.

The matrix material in the liquid state respectively introduced and consolidated in steps b) and c) is not shown in the Figures, but performed according to the method of the second aspect of the present invention, to manufacture the composite part P, which is shown in Figure 12D for the same embodiment of Figures 12A to 12C.

## Claims

1. A pushable reinforcement elongate member (R), comprising a plurality of continuous fibres, said plurality of continuous fibres are or comprise non-consolidated fibres and form a first group (F) having a first flexural modulus, in that the pushable reinforcement elongate member (R) further comprises at least one elongate element (E) having a second flexural modulus greater than said first flexural modulus, and **characterized in that** said at least one elongate element (E) is joined to said first group (F) of continuous fibres, to transfer a pushing compression force in their longitudinal direction, from the at least one elongate element (E) to the first group (F) of continuous fibres.

2. The pushable reinforcement elongate member (R) according to claim 1, wherein said elongate element (E) is joined to said first group (F) of continuous fibres at least at two locations (L) along their length.

3. The pushable reinforcement elongate member (R) according to claim 1 or 2, wherein said second flexural modulus is at least 10 times greater than said first flexural modulus.

4. The pushable reinforcement elongate member (R) according to claim 1, 2 or 3, wherein said first flexural modulus is below 10000 MPa, and said second flexural modulus is above 10000 MPa.

5. The pushable reinforcement elongate member (R) according to any of the previous claims, wherein the at least one elongate element (E) is formed by a second group of continuous fibres.

6. The pushable reinforcement elongate member (R) according to any of the previous claims, wherein said non-consolidated fibres are dry reinforcement continuous fibres.

7. The pushable reinforcement elongate member (R) according to claim 6, wherein said first group (F) of continuous fibres also includes, combined with said dry reinforcement continuous fibres, thermoplastic fibres and/or a non-cured thermoset resin.

8. The pushable reinforcement elongate member (R) according to claim 5 or to any of claims 6 or 7 when depending on claim 5, wherein the continuous fibres of said second group are or comprise continuous fibres combined and consolidated with a thermoplastic or thermoset matrix.

9. The pushable reinforcement elongate member (R) according to any of the previous claims, wherein said first group (F) of continuous fibres form at least one first fibre bundle.

10. The pushable reinforcement elongate member (R) according to any of the claims 1 to 8, wherein said first group (F) of continuous fibres are assembled into at least one first fibre tape.

11. The pushable reinforcement elongate member (R) according to claim 9 or 10 when depending on claim 2, wherein the at least one elongate element (E) is arranged at the perimeter region of said at least one first fibre bundle or tape and/or within said at least one first fibre bundle or tape, at least at said at least two locations (L).

12. The pushable reinforcement elongate member (R) according to claim 2 or to any of claims 3 to 11 when depending on claim 2, comprising at least one joining element (J) for providing said mutually joining of the first group (F) of continuous fibres and the at least one elongate element (E) at said at least two locations (L), while enabling the impregnation of the continuous fibres of the first group (F) with a liquid matrix flowing through said at least one joining element (J) and/or through regions of the continuous fibres of the first group (F) not covered by the at least one joining element (J).

13. The pushable reinforcement elongate member (R) according to claim 12, wherein said at least one joining element (J) mutually joins the first group (F) of continuous fibres and the at least one elongate element (E) by braiding, winding, tying or stitching at least one thread at said at least two locations (L) and/or by applying an adhesive or binding matrix material at the at least two locations (L).

14. The pushable reinforcement elongate member (R) according to claim 13, wherein said at least two locations (L) are distanced between 5 and 50 times the diameter or thickness of the pushable reinforcement elongate member (R).

15. A method for manufacturing a part (P) made from composite material, wherein the part (P) comprises a body (B) and continuous fibres arranged within said body (B), wherein the method comprises the steps of:
a) obtaining a body (B) that includes one or more tubular cavities (T) in its interior, wherein each tubular cavity (T) of said one or more tubular cavities (T) extends between a first end, disposed on the outer surface of the body (B) and which comprises an inlet orifice, and a second end;
b) introducing a pushable reinforcement elongate member (R) and a matrix material in the liquid state in the interior of at least one tubular cavity (T) of said one or more tubular cavities (T) through its inlet orifice, such that the input end of the pushable reinforcement elongate member (R) advances towards the second end of said at least one tubular cavity (T); and
c) consolidating said matrix material until it solidifies, adhering to the body of the part and fixing the pushable reinforcement elongate member (R) in the interior of said at least one tubular cavity (T),
wherein said pushable reinforcement elongate member (R) comprises a plurality of continuous fibres forming a first group (F) having a first flexural modulus, **characterized in that** the pushable reinforcement elongate member (R) further comprises at least one elongate element (E) having a second flexural modulus greater than said first flexural modulus, and wherein said at least one elongate element (E) is joined to said first group (F) of continuous fibres, to transfer a pushing compression force in their longitudinal direction, from the at least one elongate element (E) to the first group (F) of continuous fibres.

16. The method for manufacturing a part (P) made from composite material according to claim 15, wherein said pushable reinforcement elongate member (R) is defined according to any of claims 1 to 14.

## Patentansprüche

1. Verschiebbares längliches Verstärkungsteil (R), das mehrere Endlosfasern umfasst, wobei die mehreren Endlosfasern nicht verfestigte Fasern sind oder solche umfassen und eine erste Gruppe (F) bilden, die einen ersten Biegemodul aufweist, wobei das verschiebbare längliche Verstärkungsteil (R) ferner mindestens ein längliches Element (E) umfasst, das einen zweiten Biegemodul aufweist, der größer ist als der erste Biegemodul, **dadurch gekennzeichnet, dass** das mindestens eine längliche Element (E) mit der ersten Gruppe (F) von Endlosfasern verbunden ist, um eine Schub-Kompressionskraft in deren Längsrichtung von dem mindestens einen länglichen Element (E) zu der ersten Gruppe (F) von Endlosfasern zu übertragen.

2. Verschiebbares längliches Verstärkungsteil (R) nach Anspruch 1, wobei das längliche Element (E) mit der ersten Gruppe (F) von Endlosfasern an mindestens zwei Stellen (L) entlang deren Länge verbunden ist.

3. Verschiebbares längliches Verstärkungsteil (R) nach Anspruch 1 oder 2, wobei der zweite Biegemodul mindestens zehnmal größer ist als der erste Biegemodul.

4. Verschiebbares längliches Verstärkungsteil (R) nach Anspruch 1, 2 oder 3, wobei der erste Biegemodul unter 10000 MPa liegt und der zweite Biegemodul über 10000 MPa liegt.

5. Verschiebbares längliches Verstärkungsteil (R) nach einem der vorhergehenden Ansprüche, wobei das mindestens eine längliche Element (E) durch eine zweite Gruppe von Endlosfasern gebildet ist.

6. Verschiebbares längliches Verstärkungsteil (R) nach einem der vorhergehenden Ansprüche, wobei die nicht verfestigten Fasern trockene Verstärkungs-Endlosfasern sind.

7. Verschiebbares längliches Verstärkungsteil (R) nach Anspruch 6, wobei die erste Gruppe (F) von Endlosfasern, kombiniert mit den trockenen Verstärkungs-Endlosfasern, auch thermoplastische Fasern und/oder ein nicht ausgehärtetes duroplastisches Harz enthält.

8. Verschiebbares längliches Verstärkungsteil (R) nach Anspruch 5 oder nach einem der Ansprüche 6 oder 7, wenn abhängig von Anspruch 5, wobei die Endlosfasern der zweiten Gruppe Endlosfasern sind oder solche umfassen, die mit einer thermoplastischen oder duroplastischen Matrix kombiniert und verfestigt sind.

9. Verschiebbares längliches Verstärkungsteil (R) nach einem der vorhergehenden Ansprüche, wobei die erste Gruppe (F) von Endlosfasern mindestens ein erstes Faserbündel bildet.

10. Verschiebbares längliches Verstärkungsteil (R) nach einem der Ansprüche 1 bis 8, wobei die erste Gruppe (F) von Endlosfasern zu mindestens einem ersten Faserband zusammengesetzt werden.

11. Verschiebbares längliches Verstärkungsteil (R) nach Anspruch 9 oder 10, wenn abhängig von Anspruch 2, wobei das mindestens eine längliche Element (E), in dem Umfangsbereich des mindestens einen Faserbündels oder -bandes und/oder innerhalb des mindestens einen ersten Faserbündels oder -bandes zumindest an den mindestens zwei Stellen (L) angeordnet ist.

12. Verschiebbares längliches Verstärkungsteil (R) nach Anspruch 2 oder nach einem der Ansprüche 3 bis 11, wenn abhängig von Anspruch 2, umfassend mindestens ein Verbindungselement (J) zum Bereitstellen der gegenseitigen Verbindung der ersten Gruppe (F) von Endlosfasern und des mindestens einen länglichen Elements (E) an den mindestens zwei Stellen (L), während die Imprägnierung der Endlosfasern der ersten Gruppe (F) mit einer flüssigen Matrix ermöglicht wird, die durch das mindestens eine Verbindungselement (J) und/oder durch Bereiche der Endlosfasern der ersten Gruppe (F), die nicht durch das mindestens eine Verbindungselement (J) bedeckt sind, fließt.

13. Verschiebbares längliches Verstärkungsteil (R) nach Anspruch 12, wobei das mindestens eine Verbindungselement (J) die erste Gruppe (F) von Endlosfasern und das mindestens eine längliche Element (E) durch Flechten, Wickeln, Binden oder Nähen mindestens eines Fadens an den mindestens zwei Stellen (L) und/oder durch Aufbringen eines Klebstoffs oder Bindematrixmaterials an den mindestens zwei Stellen (L) miteinander verbindet.

14. Verschiebbares längliches Verstärkungsteil (R) nach Anspruch 13, wobei die mindestens zwei Stellen (L) um einen Abstand zwischen dem Fünf- und Fünfzigfachen des Durchmessers oder der Dicke des verschiebbaren länglichen Verstärkungsteils (R) voneinander beabstandet sind.

15. Verfahren zum Herstellen eines aus Verbundmaterial gefertigten Teils (P), wobei das Teil (P) einen Körper (B) und Endlosfasern, die innerhalb Körpers (B) angeordnet sind, umfasst, wobei das Verfahren die Schritte umfasst:
a) Erhalten eines Körpers (B), der ein oder mehrere röhrenförmige Hohlräume (T) in seinem Inneren enthält, wobei sich jeder röhrenförmige Hohlraum (T) des einen oder der mehreren röhrenförmigen Hohlräume (T) zwischen einem ersten Ende, das an der Außenfläche des Körpers (B) angeordnet ist und eine Einlassöffnung aufweist, und einem zweiten Ende erstreckt;
b) Einführen eines verschiebbaren länglichen Verstärkungsteils (R) und eines Matrixmaterials in dem flüssigen Zustand in das Innere des mindestens einen röhrenförmigen Hohlraums (T) des einen oder der mehreren röhrenförmigen Hohlräume (T) durch dessen Einlassöffnung, so dass das Eingangsende des verschiebbaren länglichen Verstärkungsteils (R) zu dem zweiten Ende des mindestens einen röhrenförmigen Hohlraums (T) vordringt; und
c) Verfestigen des Matrixmaterials, bis es fest wird, Anhaften an dem Körper des Teils und Fixieren des verschiebbaren länglichen Verstärkungsteils (R) in dem Inneren des mindestens einen röhrenförmigen Hohlraums (T),
wobei das verschiebbare längliche Verstärkungsteil (R) mehrere Endlosfasern umfasst, die eine erste Gruppe (F) bilden, die einen ersten Biegemodul aufweist,
**dadurch gekennzeichnet, dass** das verschiebbare längliche Verstärkungsteil (R) ferner mindestens ein längliches Element (E) umfasst, das einen zweiten Biegemodul aufweist, der größer ist als der erste Biegemodul, und wobei das mindestens eine längliche Element (E) mit der ersten Gruppe (F) von Endlosfasern verbunden ist, um eine Schub-Kompressionskraft in deren Längsrichtung von dem mindestens einen länglichen Element (E) zu der ersten Gruppe (F) von Endlosfasern zu übertragen.

16. Verfahren zum Herstellen eines aus Verbundmaterial gefertigten Teils (P) nach Anspruch 15, wobei das verschiebbare längliche Verstärkungsteil (R) nach einem der Ansprüche 1 bis 14 definiert ist.

## Revendications

1. Un élément allongé de renforcement poussable (R), comprenant une pluralité de fibres continues, ladite pluralité de fibres continues étant ou comprenant des fibres non consolidées et formant un premier groupe (F) ayant un premier module de flexion, en ce que l'élément allongé de renforcement poussable (R) comprend en outre au moins un élément allongé (E) ayant un second module de flexion supérieur audit premier module de flexion, et **caractérisé en ce que** ledit au moins un élément allongé (E) est relié audit premier groupe (F) de fibres continues, pour transférer une force de compression de poussée dans leur direction longitudinale, dudit au moins un élément allongé (E) audit premier groupe (F) de fibres continues.

2. L'élément allongé de renforcement poussable (R) selon la revendication 1, dans lequel ledit élément allongé (E) est relié audit premier groupe (F) de fibres continues en au moins deux emplacements (L) le long de leur longueur.

3. L'élément allongé de renforcement poussable (R) selon la revendication 1 ou 2, dans lequel ledit second module de flexion est au moins 10 fois supérieur audit premier module de flexion.

4. L'élément allongé de renforcement poussable (R) selon la revendication 1, 2 ou 3, dans lequel ledit premier module de flexion est inférieur à 10000 MPa, et ledit second module de flexion est supérieur à 10000 MPa.

5. L'élément allongé de renforcement poussable (R) selon l'une quelconque des revendications précédentes, dans lequel ledit au moins un élément allongé (E) est formé par un second groupe de fibres continues.

6. L'élément allongé de renforcement poussable (R) selon l'une quelconque des revendications précédentes, dans lequel lesdites fibres non consolidées sont des fibres continues de renforcement sèches.

7. L'élément allongé de renforcement poussable (R) selon la revendication 6, dans lequel ledit premier groupe (F) de fibres continues comprend également, combinées auxdites fibres continues de renforcement sèches, des fibres thermoplastiques et/ou une résine thermodurcissable non durcie.

8. L'élément allongé de renforcement poussable (R) selon la revendication 5 ou selon l'une quelconque des revendications 6 ou 7 lorsqu'elle dépend de la revendication 5, dans lequel les fibres continues dudit second groupe sont ou comprennent des fibres continues combinées et consolidées avec une matrice thermoplastique ou thermodurcissable.

9. L'élément allongé de renforcement poussable (R) selon l'une quelconque des revendications précédentes, dans lequel ledit premier groupe (F) de fibres continues forme au moins un premier faisceau de fibres.

10. L'élément allongé de renforcement poussable (R) selon l'une quelconque des revendications 1 à 8, dans lequel ledit premier groupe (F) de fibres continues est assemblé en au moins une première bande de fibres.

11. L'élément allongé de renforcement poussable (R) selon la revendication 9 ou 10 lorsqu'elle dépend de la revendication 2, dans lequel ledit au moins un élément allongé (E) est disposé dans la région périphérique dudit au moins un premier faisceau ou de ladite au moins une première bande de fibres et/ou à l'intérieur dudit au moins un premier faisceau ou de ladite au moins une première bande de fibres, au moins auxdits au moins deux emplacements (L).

12. L'élément allongé de renforcement poussable (R) selon la revendication 2 ou selon l'une quelconque des revendications 3 à 11 lorsqu'elle dépend de la revendication 2, comprenant au moins un élément de liaison (J) destiné à assurer ladite liaison mutuelle du premier groupe (F) de fibres continues et dudit au moins un élément allongé (E) auxdits au moins deux emplacements (L), tout en permettant l'imprégnation des fibres continues du premier groupe (F) avec une matrice liquide s'écoulant à travers ledit au moins un élément de liaison (J) et/ou à travers des régions des fibres continues du premier groupe (F) non recouvertes par ledit au moins un élément de liaison (J).

13. L'élément allongé de renforcement poussable (R) selon la revendication 12, dans lequel ledit au moins un élément de liaison (J) relie mutuellement le premier groupe (F) de fibres continues et ledit au moins un élément allongé (E) par tressage, enroulement, nouage ou couture d'au moins un fil auxdits au moins deux emplacements (L) et/ou par application d'un matériau adhésif ou de matrice de liaison auxdits au moins deux emplacements (L).

14. L'élément allongé de renforcement poussable (R) selon la revendication 13, dans lequel lesdits au moins deux emplacements (L) sont espacés d'une distance comprise entre 5 et 50 fois le diamètre ou l'épaisseur de l'élément allongé de renforcement poussable (R).

15. Un procédé de fabrication d'une pièce (P) constituée d'un matériau composite, dans lequel la pièce (P) comprend un corps (B) et des fibres continues disposées à l'intérieur dudit corps (B), dans lequel le procédé comprend les étapes de :
a) obtenir un corps (B) qui comprend une ou plusieurs cavités tubulaires (T) en son intérieur, dans lequel chaque cavité tubulaire (T) de ladite une ou plusieurs cavités tubulaires (T) s'étend entre une première extrémité, disposée sur la surface extérieure du corps (B) et qui comprend un orifice d'entrée, et une seconde extrémité ;
b) introduire un élément allongé de renforcement poussable (R) et un matériau de matrice à l'état liquide à l'intérieur d'au moins une cavité tubulaire (T) de ladite une ou plusieurs cavités tubulaires (T) à travers son orifice d'entrée, de telle sorte que l'extrémité d'introduction de l'élément allongé de renforcement poussable (R) avance vers la seconde extrémité de ladite au moins une cavité tubulaire (T) ; et
c) consolider ledit matériau de matrice jusqu'à ce qu'il se solidifie, en adhérant au corps de la pièce et en fixant l'élément allongé de renforcement poussable (R) à l'intérieur de ladite au moins une cavité tubulaire (T), dans lequel ledit élément allongé de renforcement poussable (R) comprend une pluralité de fibres continues formant un premier groupe (F) ayant un premier module de flexion, **caractérisé en ce que** l'élément allongé de renforcement poussable (R) comprend en outre au moins un élément allongé (E) ayant un second module de flexion supérieur audit premier module de flexion, et dans lequel ledit au moins un élément allongé (E) est relié audit premier groupe (F) de fibres continues, pour transférer une force de compression de poussée dans leur direction longitudinale, dudit au moins un élément allongé (E) audit premier groupe (F) de fibres continues.

16. Le procédé de fabrication d'une pièce (P) constituée d'un matériau composite selon la revendication 15, dans lequel ledit élément allongé de renforcement poussable (R) est défini selon l'une quelconque des revendications 1 à 14.
